# EUROPÄISCHE PATENTANMELDUNG

(11) **EP 0 948 156 A2**
(43) Veröffentlichungstag der Anmeldung: **06.10.1999**
(21) Anmeldenummer: 99105454.5
(22) Anmeldetag: 17.03.1999
(51) Int. Cl.: H04L 5/20, B60R 21/00

(54) **Schaltungsanordnung für eine serielle Sende- und Empfangsschnittstelle, insbesondere eines Insassenschutzsystems**

(30) Priorität: 03.04.1998 DE 19815012
(71) Anmelder: DaimlerChrysler AG, 70567 Stuttgart (DE)
(72) Erfinder: Ammler, Manfred, 86673 Bergheim (DE)
(74) Vertreter: Kolb, Georg

(57) **Zusammenfassung**

Bisherige Zentraleinheiten, insbesondere Insassenschutzsysteme, wiesen meist seperate serielle Sende- und Empfangsschnittstellen für die einzelnen anzuschließenden Module an, wodurch die Kosten erhöhten, wenn ein zusätzliches Diagnosemodul zugeschaltet werden soll.

Durch eine umschaltbare Schaltungsanordnung für die Schnittstelle wird diese entweder mit einem Kommunikationsmodul oder dem Diagnosemodul verbunden. Die Schaltungsanordnung ist besonders einfach und platzsparend mit Diodenschaltern aufgebaut und weist vorzugsweise eine Potentialüberwachung zur automatischen Umschaltung auf den Diagnosebetrieb auf.

## Beschreibung

Die Erfindung betrifft eine Schaltungsanordnung für eine serielle Sende- und Empfangsschnittstelle, insbesondere eines Insassenschutzsystems, gemäß dem Oberbegriff des Patentanspruches 1 sowie ein verfahren zur Steuerung dieser gemäß Anspruch 4.

Aus dem Stand der Technik sind eine vielzahl von Insassenschutzsystemen, insbesondere für Kraftfahrzeuge, bekannt, bei denen eine Zentraleinheit über eine serielle Sende- und Empfangsschnittstelle mit einem Kommunikationsmodul, beispielsweise für eine Sensoranordnung verbunden ist. Auf Basis der von der Sensoranordnung ermittelten und vom Kommunikationsmodul an die Zentraleinheit gemeldeten Informationen entscheidet die Zentraleinheit über die Auslösung von Insassenschutzeinrichtungen, beispielsweise Airbags, Gurtstraffern etc.

Um den Betriebszustand eines solchen Insassenschutzsystems beispielsweise zu Wartungs- und Instandhaltungszwecken feststellen zu können, ist es erforderlich, mittels eines Diagnosemoduls in der Zentraleinheit entsprechende Auswertungen durchführen zu können. Aufgabe der Erfindung ist es daher, eine Schaltungsanordnung für eine serielle Sende- und Empfangsschnittstelle anzugeben, mittels der möglichst kostengünstig und einfach ein solches Diagnosemodul angeschlossen werden kann. Außerdem ist es Aufgabe der Erfindung, verfahren zur Steuerung einer solchen seriellen Sende- und Empfangsschnittstelle anzugeben.

Diese Aufgaben wurden durch den Patentanspruch 1 für die Schaltungsanordnung und Patentanspruch 4 für das Verfahren gelöst. Vorteilhafte Weiterbildungen sind den Unteransprüchen zu entnehmen.

Grundgedanke der Erfindung ist es, das Diagnosemodul über die gleiche serielle Sende- und Empfangsschnittstelle anzuschließen und über einen durch die erfindungsgemäße Schaltungsanordnung im Multiplexbetrieb entsprechend die Zentraleinheit entweder mit dem Kommunikationsmodul oder mit dem Diagnosemodul verbindet. Um einen derartigen Multiplexbetrieb jedoch möglichst kostengünstig zu realisieren, bietet sich erfindungsgemäß anstelle eines funktionell gleichartigen Multiplexers die erfindungsgemäße Schaltungsanordnung an, die auf einer Diodenlogik basiert. Dabei werden von Tristate-Ausgängen der Zentraleinheit vier Steuersignale erzeugt, mittels derer die Schaltungsanordnung gesteuert wird. Dabei wird gleichzeitig überwacht, ob ein Diagnosemodul angeschaltet und aktiv ist, um in diesem Falle vom Kommunikationsmodul auf das Diagnosemodul umzuschalten.

Die Erfindung wird nachfolgend anhand von Ausführungsbeispielen und Figuren näher erläutert.

Kurze Beschreibung der Figuren:
- Figur 1: Blockschema zur Bescheibung der Wirkungswahl der Schaltungsanordnung mit einem Multiplexer als Ersatzschaltbild für die Schaltungsanordnung,
- Figur 2: Ausgestaltung der Schaltungsanordnung,
- Figur 3: Gesamtanordnung der Zentraleinheit mit Kommunikations- und Diagnosemodul.

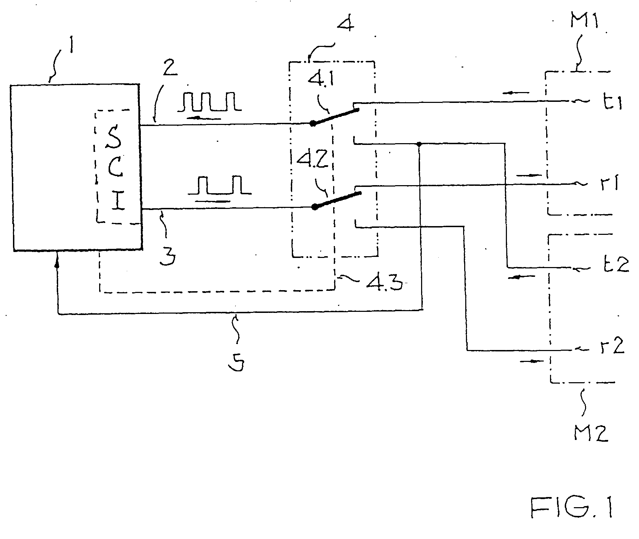

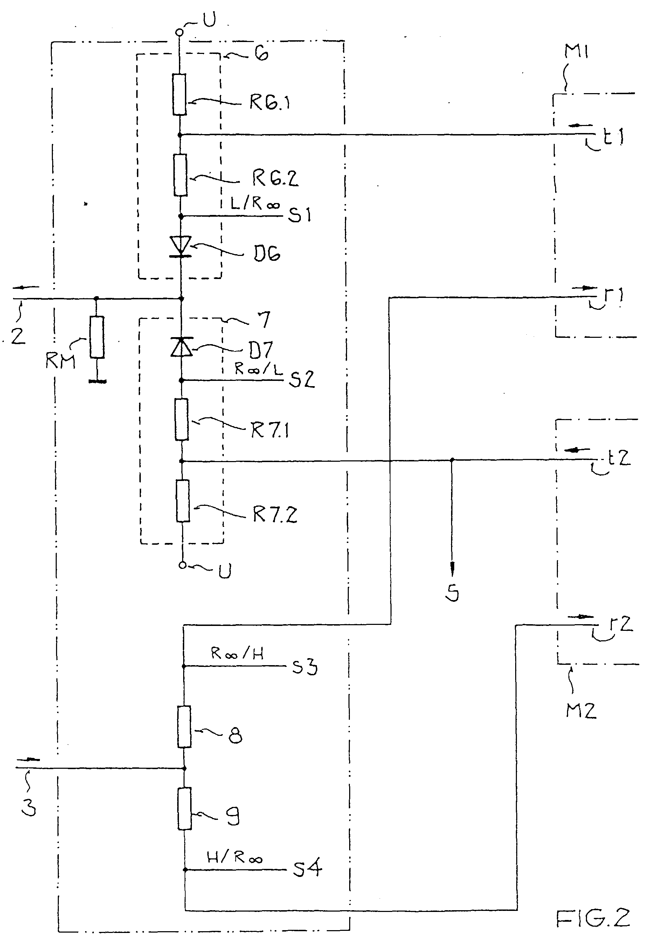

Die Figur 1 zeigt in einem Blockchip die Zentraleinheit 1 mit der seriellen Sende- und Empfangsschnittstelle (SCI), die über die Empfangsleitung 2 und die Sendeleitung 3 über den Multiplexer 4 mit dem Kommunikationsmodul M1 oder dem Diagnosemodul M2 verbunden werden kann. Als Ersatzschaltbild der erfindungsgemäßen Schaltungsanordnung wurde zur Verdeutlichung der Wirkungsweise der Multiplexer 4 mit den Schaltern 4.1 und 4.2 dargestellt, die über die Steuersignale 4.3 von der Zentraleinheit 1 aus gesteuert werden. Die schaltungstechnische Ausgestaltung ist jedoch in Figur 2 dargestellt. Anhand der Multiplexers 4 und dessen Schaltern 4.1 und 4.2 läßt sich jedoch die grundlegende Wirkungsweise am einfachsten veranschaulichen, danach sind in Abhängigkeit von dem von der Zentraleinheit 1 gesteuerten Schaltzustand der Schalter 4.1 und 4.2 die Empfangsleitung 2 der Zentraleinheit 1 entweder mit dem Sendeausgang T1 des Kommunikationsmoduls M1 oder im anderen Schaltzustand mit dem Sendeausgang T2 des Diagnosemoduls M2 verbunden. Analog dazu ist die Sendeleitung 3 der Zentraleinheit in Abhängigkeit vom Schaltzustand des Schalters 4.2 entweder mit dem Empfangseingang R1 des Kommunikationsmoduls M1 oder mit dem Empfangseingang R2 des Diagnosemoduls M2 verbunden. In Figur 1 wird bereits als Prinzip Darstellung eine Potentialüberwachung 5 des Sendeausgangs T2 des Diagnosemoduls M2 dargestellt, welche über das Potential der Zentraleinheit 1 mitteilt, ob das Diagnosemodul M2 Signale sendet. Dann kann die Zentraleinheit 1 über die Steuersignale 4.3 die Schalter 4.1 und 4.2 des Muitipiexers 4 umschalten.

Die exakte Ausgestaltung der erfindungsgemäßen Schaltungsanordnung ist nun in Figur 2 dargestellt. Dabei sind die Empfangsleitung 2 und die Sendeleitung 3 von der Zentraleinheit aus dargestellt. Die Empfangsleitung 2 der Zentraleinheit 1 ist über einen ersten Diodenschalter 6 mit dem Sendeausgang T1 des Kommunikationsmoduls M1 verbunden. Der Diodenschalter 6 weist eine Diode D6 auf, die mit ihrer Kathode mit der Empfangsleitung 2 der Zentraleinheit 1 verbunden ist und einen Spannungsteil bestehend aus den Teilwiderständen R_{6.1} und R_{6.2} zur Versorgungsspannung U. Zwischen dem ersten Teilwiderstand R_{6.1} und dem zweiten Teilwiderstand R_{6.2} ist der Sendeausgang T1 des Kommunikationsmoduls M1 angeschlossen. Der Diodenschalter 6 wird mittels des ersten Steuersignals S1 angesteuert, Welches an der Anode der Diode D6 zugeschaltet ist. Symmetrisch dazu ist der zweite Diodenschalter 7 mit den Teilwiderständen R_{7.1} und R_{7.2} sowie der Diode D7 aufgebaut und zwischen den Teilwiderständen R_{7.1} und R_{7.2} der Sendeausgang T2 des Diagnosemoduls M2 angeschlossen. Außerdem ist zwischen diesen Teilwiderständen R_{7.1} und R_{7.2} die Potentialüberwachung 5 durch die Zentraleinheit 1 zugeschaltet.

Zwecks des Datenaustausches zwischen der Zentraleinheit 1 und dem Kommunikationsmodul M1 wird das erste Steuersignal S1 auf hochohmig und das zweite Steuersignal S2 auf Low gesteuert, wodurch der zweite Diodenschalter 7 gesperrt wird, während der erste Diodenschalter 6 für die Signale vom Sendeausgang T1 des Kommunikationsmoduls M1 durchlässig ist. Die Diode D6 ist dabei in Durchlaßrichtung geschaltet, während die Diode D7 in Sperrichtung geschaltet ist. Zum Datenaustausch zwischen der Zentraleinheit 1 und dem Diagnosemodul M2 wird das erste Steuersignal S1 auf Low und das zweite Steuersignal S2 auf hochohmig gesteuert, wodurch der erste Diodenschalter 6 nun sperrt, während der zweite Diodenschalter 7 durchlässig für Signale vom Sendeausgang T2 des Diagnosemoduls M2 ist.

Die Spannungsteiler R_{6.1}/R_{6.2} und R_{7.1}/R_{7.2} sind dabei entprechend der erforderlichen Signalpegelspannungen ausgewählt. So erweist es sich als besonders vorteilhaft für die Potentialüberwachung 5 durch die Zentraleinheit 1 den Teilwiderstand R_{7.2} zur Versorgungsspannung U hin kleiner (beispielsweise 4,7 kΩ) zu wählen als der Teilwiderstand R_{7.1}, damit der Spannungsabfall über dem Teilwiderstand R_{7.2} auch bei einer relativ geringen Treiberfähigkeit des Sendeausgangs T2 von der Potentialüberwachung 5 detektiert werden kann.

Selbstverständlich ist es grundsätzlich auch möglich, für das Kommunikationsmodul M1 eine Potentialüberwachung in Analogie zur Potentialüberwachung 5 am Diagnosemodul M2 einzurichten und ggfs. auch die Priorität der Ansteuerung zu ändern.

Die Sendeleitung 3 der Zentraleinheit 1 ist über zwei Entkopppelwiderstände 8 und 9 jeweils mit den Empfangseingängen R1 und R2 des Kommunikationsmoduls M1 bzw. des Diagnosemoduls M2 verbunden. Von der Sendeleitung 3 aus nach den Entkoppelwiderständen 8 und 9 sind jeweils die Steuersignale S3 und S4 zugeschaltet, so, daß diese zwar jeweils auf die Empfangseingänge R1 und R2 des Kommunikationsmoduls M1 und des Diagnosemoduls M2 wirken, jedoch nicht wechselseitig aufeinander sowie auf die Sendeleitung 3. Zum Datenaustausch zwischen der Zentraleinheit 1 und dem Kommunikationsmodul M1 wird das dritte Steuersignal S3 auf hochohmig und das vierte Steuersignal S4 auf High gesteuert wodurch der Empfangseingang R2 des Diagnosemoduls M2 fest auf den Ruhezustand High gezogen wird während der Empfangseingang R1 des Kommunikationsmoduls M1 dem Signal auf der Signalleitung 3 der Zentraleinheit 1 folgt. Entsprechend umgedreht wird zum Datenaustausch zwischen der Zentraleinheit 1 und dem Diagnosemodul M2 das dritte Steuersignal auf High und das vierte Steuersignal auf hochohmig gesteuert, wodurch der Empfangseingang R1 des Kommunikationsmoduls fest auf den Ruhezustand High gezogen wird, während der Empfangseingang R2 des Diagnosemoduls M2 dem Signal auf der Sendeleitung 3 der Zentraleinheit 1 folgt.

Durch den einfachen Aufbau mit elementaren Bauelementen läßt sich diese Schaltungsanordnung deutlich preisgünstiger als reine Multiplexer-Baugruppen realisieren und auf einer Leiterplatte durch eine geschickte Ausnutzung von Freiflächen auch platzsparender anordnen und gegebenenfalls verteilen.

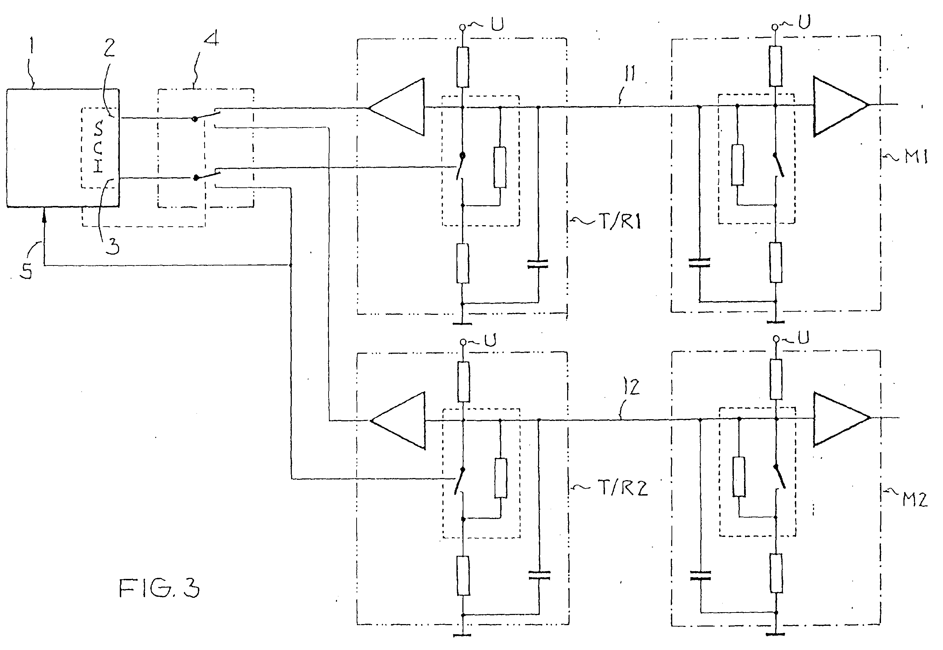

Die Figur 3 zeigt demgegenüber nun noch die Gesamtanordnung von der Zentraleinheit 1 sowie dem Kommunikationsmodul M1 und dem Diagnosemodul M2, die über die Verbindungsleitungen 11 und 12 jeweils mit einer T/R1 und T/R2 verbunden sind, welche die Empfangseingänge (R1, R2) und Sendeausgänge (T1, T2) mit diesen bidirektionalen Verbindungsleitungen 11 und 12 verbinden. Wieder ist die Schaltungsanordnung gemäß Figur 2 als Multiplexersatzschaltbild 4 dargestellt, welches über die Signalleitung S1 bis S4 von der Zentraleinheit aus angesteuert wird. Die Zentraleinheit 1 ist über die Potentialüberwachung 5 wieder mit dem Sendeausgang T2 des Diagnosemoduls M2 verbunden. Die Transiver T/R1 und T/R2 sowie die Verbindungsleitungen 11 und 12 sowie entsprechende Transiver-Baugruppen in den Modulen M1 und M2 erlauben eine räumliche Verteilungen des Kommunikationsmoduls M1 und des Diagnosemoduls M2 innerhalb des Fahrzeuges, wobei das Diagnosemodul M2 beispielsweise über einen Stecker auch erst im Bedarfsfalle, beispielsweise während eines Kundendienstservices in einer Werkstatt zugeschaltet wird. Es sind dabei jeweils nur eine Verbindungsleitung 11 bzw. 12 erforderlich, wenn diese bidirektional betrieben wird. Außerdem kann die Zentraleinheit 1 über eine gemeinsame serielle Sende- und Empfangsschnittstelle SCI angesteuert werden, wodurch sich die Kosten für diese Zentraleinheit 1 deutlich reduzieren gegenüber der Verwendung mehrerer serieller Schnittstellen oder gar mehrerer Zentraleinheiten. Die Potentialüberwachung 5 ermöglicht eine Umschaltung der Sende- und Empfangsleitungen (2 und 3) sowie der Zentraleinheit 1.

## Patentansprüche

1. Schaltungsanordnung (4) für eine serielle Sende- und Empfangsschnittstelle (SCI) einer Zentraleinheit (1) eines Insassenschutzsystems, an der über einer Sendeleitung (3) und einer Empfangsleitung (2) digitale Signale mit einem Kommunikationsmodul (M1) ausgetauscht werden, **dadurch gekennzeichnet, daß**
über die gleiche serielle Sende- und Empfangsschnittstelle (SCI) ein zusätzliches Diagnosemodul (M2) angeschlossen werden kann, indem die Zentraleinheit (1) zusätzliche Tristate-Ausgänge für vier Steuersignale (S1...S4) aufweist,
die Empfangsleitung (21 der Zentraleinheit (1) über einen ersten mittels eines ersten Steuersignals (S1) schaltbaren Diodenschalter (6) mit einem Sendeausgang (t1) des Kommunikationsmoduls (M1) und über einen zweiten mittels eines zweiten Steuersignals (S2) schaltbaren Diodenschalter (7) mit einem Sendeausgang (t2) des Diagnosemoduls M2) verbunden ist, und
die Sendeleitung (3) der Zentraleinheit (1) über einen ersten Entkoppelwiderstand (8) mit einem Empfangseingang (r1) des Kommunikationsmoduls (M1) und über einen zweiten Entkoppelwiderstand (9) mit einem Empfangseingang (r2) des Diagnosemoduls (M2) verbunden ist, wobei von der Sendeleitung (3) aus nach dem ersten Entkoppelwiderstand (8) ein drittes Steuersignal (S3) und nach dem zweiten Entkoppelwiderstand (9) ein viertes Steuersignal (S4) anliegt.

2. Schaltungsanordnung nach Anspruch 1, **dadurch gekennzeichnet, daß** die Diodenschalter (6, 7) jeweils eine Diode (D6, D7) aufweisen,
die jeweils mit ihren Kathoden mit der Empfangsleitung (2) der Zentraleinheit (1) verbunden sind, die über einen hochohmigen Widerstand (RM) zur Sicherstellung der erforderlichen Signalpegel auf Masse geschaltet ist, und
an den Anoden der Dioden (D6, D7) jeweils das Steuersignal (S1, S2) zugeschaltet ist sowie
ein Spannungsteiler, dessen einer Teilwiderstand (R_{6.1}, R_{7.1}) mit der Anode und dessen anderen Teilwiderstand (R_{6.1}, R_{7.1}) mit einer Versorgungsspannung (U) verbunden ist und zwischen den Teilwiderständen jeweils ein Sendeausgang (t1, t2) angeschaltet ist.

3. Schaltungsanordnung nach Anspruch 2, **dadurch gekennzeichnet, daß** der Spannungsteiler (R_{7.1}, R_{7.2}) des Diodenschalters (7), der mit dem Sendeausgang (t2) vom Diagnosemodul (M2) verbunden ist, zwischen den Teilwiderständen eine Potentialüberwachung (5) durch die Zentraleinheit (1) zugeschaltet ist.

4. Verfahren zur Steuerung einer seriellen Sende- und Empfangsschnittstelle einer Zentraleinheit mittels einer Schaltungsanordnung nach einem der vorangehenden Ansprüche, **dadurch gekennzeichnet, daß**
a) zum Datenaustausch zwischen der Zentraleinheit (1) und dem Kommunikationsmodul (M1)
a1) das erste Steuersignal (S1) auf hochohmig und das zweite Steuersignal (S2) auf Low gesteuert wird, wodurch der zweite Diodenschalter (7) sperrt während der erste (6) durchlässig bleibt,
a2) das dritte Steuersignal (S3) auf hochohmig und das vierte Steuersignal (S4) auf High gesteuert wird, wodurch der Empfangseingang (r2) des Diagnosemoduls (M2) fest auf den Ruhezustand High gezogen wird, während der Empfangseingang (r1) des Kommunikationsmoduls (M1) dem Signal auf der Sendeleitung (3) der Zentraleinheit (1) folgt,
b) und zum Datenaustausch zwischen der Zentraleinheit (1) und dem Diagnosemodul (M2)
b1) das erste Steuersignal (S1) auf Low und das zweite Steuersignal (s2) auf hochohmig gesteuert wird, wodurch der erste Diodenschalter (6) sperrt während der zweite Diodenschalter (7) durchlässig bleibt,
b2) das dritte Steuersignal (S3) auf High und das vierte Steuersignal (S4) auf hochohmig gesteuert wird, wodurch der Empfangseingang (r1) des Kommunikationsmoduls (M1) fest auf den Ruhezustand High gezogen wird, während der Empfangseingang (r2) des Diagnosemoduls (M2) dem Signal auf der Sendeleitung (3) der Zentraleinheit (1) folgt.

5. Verfahren nach Anspruch 4, **dadurch gekennzeichnet, daß** die Zentraleinheit (1) vom Datenaustausch mit dem Kommunikationsmodul (M1) zum Datenaustausch mit dem Diagnosemodul (M2) wechselt, wenn die Zentraleinheit (1) über die Potentialüberwachung (5) am Spannungsteiler (R_{7.1}, R_{7.2}) zum Diagnosemodul für ein vereinbartes Signal (M2) erkennt.
